# EUROPÄISCHE PATENTSCHRIFT

(11) **EP 1 163 836 B1**
(45) Veröffentlichungstag und Bekanntmachung des Hinweises auf die Patenterteilung: **09.05.2007**
(21) Anmeldenummer: 01113354.3
(22) Anmeldetag: 01.06.2001
(51) Int. Cl.: A01F 15/10, A01D 90/02

(54) **Erntegutförderanordnung**
Crop transporting device
Dispositif de transport de récolte

(30) Priorität: 15.06.2000 US 594252
(43) Veröffentlichungstag der Anmeldung: 19.12.2001
(73) Patentinhaber: DEERE & COMPANY, Moline, Illinois 61265-8098 (US)
(72) Erfinder: Engel, Manfred, 66484 Grossteinhausen (DE)
(74) Vertreter: Magin, Ludwig Bernhard

(56) Entgegenhaltungen:
- EP-A- 0 470 356
- EP-A- 1 097 629
- GB-A- 919 870
- GB-A- 1 343 031
- US-A- 3 023 560
- US-A- 3 766 721
- US-A- 4 720 962

## Beschreibung

Die Erfindung betrifft eine Erntegutförderanordnung mit einem oberschlächtig fördernden Aufnehmer und wenigstens einer diesem stromabwärts folgenden Schnecke mit wenigstens einem in Drehrichtung ansteigenden Erntegutanheber unterhalb der sich eine Schneckenmulde erstreckt.

Die europäische Patentanmeldung 00123035 offenbart eine Rundballenpresse mit einem Aufnehmer, der Erntegut vom Boden aufnimmt und es zu einer Ballenbildungskammer fördert. Stromabwärts des Aufnehmers trifft das Erntegut auf die Schnecken eines oberschlächtig und zur Mitte fördernden Rotationsförderers. Auf einem Schneckenkern sind Erntegutanheber angebracht, die in der Drehrichtung von einer radial innen gelegenen Stelle zu einer außen gelegenen Stelle ansteigen und dabei das Erntegut radial bewegen, so daß es besser von einem zwischen den Schnecken befindlichen Förderrotor angenommen werden kann.

Das der Erfindung zugrunde liegende Problem wird darin gesehen, daß aufgenommene Fremdkörper zwischen den Erntegutanhebern und einer sie umgebenden Schneckenmulde eingeklemmt werden können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise öffnet sich die Zone, in der sich ein Fremdkörper befinden kann und läßt dessen Auswurf zu. Die Schneckenmulde verläuft somit allenfalls tangential, vorzugsweise aber einer Tangentialen gegenüber sogar nach außen abgewinkelt.

Die Ausbildung der Schneckenmulde derart, daß Fremdkörper nicht eingeklemmt werden, kann dann leicht vorgenommen werden, wenn die Schneckenmulde zugleich der Befestigung der rückwärtigen oberen Endbereiche von Abstreiferblechen des Aufnehmers dient und hierzu kammartig ausgebildet ist, da dann die einzelnen "Zähne" des Kamms von der Umlaufbahn der Erntegutanheber weggebogen werden können.

Das Vorsehen eines Spalts im Bodenbereich der Schneckenmulde, der im wesentlichen nur dann einen Auslaß bietet, wenn die Erntegutförderanordnung außer Betrieb ist, ist eine einfache Möglichkeit, Wasser, Schmutz und Erntegutreste z. B. bei Transport oder Stillstand entweichen zu lassen, während Erntegut während des Betriebs nicht entfallen kann.

Die Bereitstellung langer und kurzer Abstreiferbleche macht es in einfacher Weise möglich, einen Aufnehmer mit erfindungsgemäßen Entlastungszonen im Bereich der Erntegutanheber auszubilden.

Pressen, z. B. Rundballenpressen oder Großballenpressen werden zunehmend mit Aufnehmern ausgerüstet, deren Breite die einer Ballenbildungskammer überschreitet, so daß zur Mitte fördernde Schnecken und zwischen diesen angeordnete Rotationsförderer erforderlich sind, so daß dort die Verwendung von Erntegutanhebern und Entlastungszonen in deren Umlaufbereich hohe Vorteile bietet.

In der Zeichnung ist ein nachfolgend näher beschriebenes Ausführungsbeispiel der Erfindung dargestellt. Es zeigt:
- Fig. 1: eine Presse in Seitenansicht mit einer Erntegutförderanordnung,
- Fig. 2: die Erntegutförderanordnung in vergrößerter Darstellung und
- Fig. 3: die Erntegutförderanordnung in einer perspektivischen Darstellung von vorne.

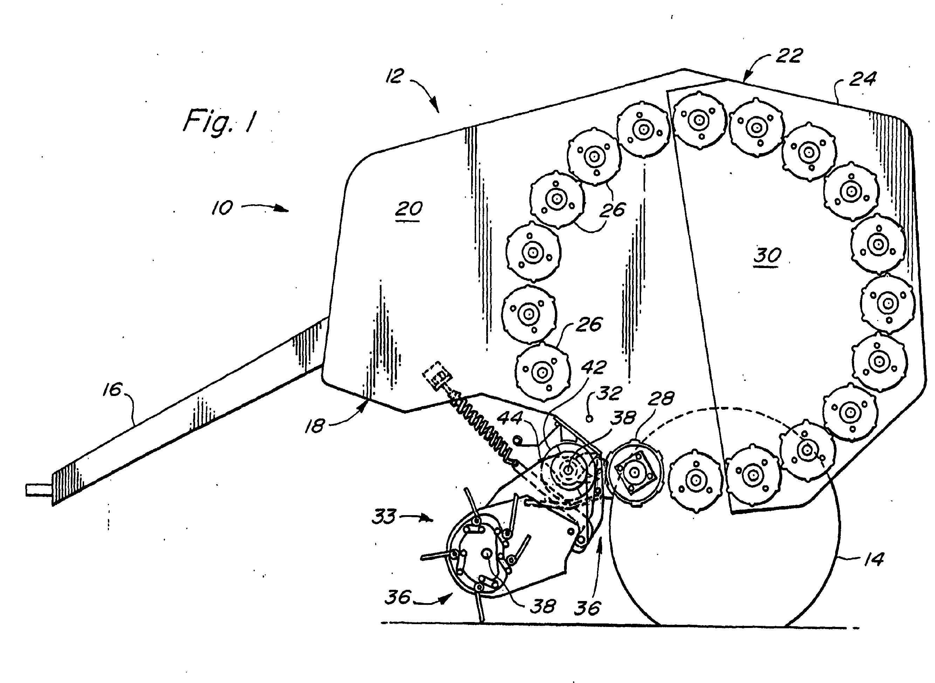

In Figur 1 ist eine Presse 10 zum Herstellen großer zylindrischer Ballen gezeigt. Die Presse 10 enthält einen Hauptrahmen oder Fahrgestell 12, das auf Bodenrädern 14 abgestützt ist und von dem aus sich eine Deichsel 14 nach vorne erstreckt, um an ein Zugfahrzeug, wie etwa einen nicht gezeigten landwirtschaftlichen Traktor angehängt zu werden. Das Fahrgestell 12 enthält einen Vorderteil 18, der ein Paar sich gegenüberliegender Seitenwände 20 umfaßt, und einen rückwärtigen Abschnitt in der Art einer Auslaßklappe 22, die sich gegenüberliegende Seitenwände 24 besitzt. Die Auslaßklappe 22 ist schwenkbar an einen rückwärtigen oberen Bereich des Vorderteils 18 für eine Schwenkbewegung zwischen einer abgesenkten Arbeitsstellung - wie dargestellt - und einer angehobenen Auslaßstellung, in der ein gebildeter Ballen auf den Boden fallen gelassen werden kann. Eine Vielzahl von Ballenbildungselementen, die hier als eine Vielzahl gleicher Rollen 26 und als eine größere Bodenrolle 28 dargestellt sind, die im wesentlichen auf einem Kreis angeordnet sind, um mit den Seitenwänden 22 und 24 zur Bildung einer Ballenbildungskammer 30 unveränderlichen Volumens zusammen zu wirken, erstreckt sich zwischen den Seitenwänden 20 des Vorderteils 18 und den Seitenwänden 24 der Auslaßklappe 22 und ist in diesen montiert. Die untere vordere Rolle 26 und die den Ballen tragende Bodenrolle 28 sind voneinander entfernt, um so einen Einlaß 32 festzulegen, durch den Erntegut zugeführt werden kann, um so unter der Wirkung der Rollen 26 und der Bodenrolle 28 zu einem Ballen aufgerollt zu werden. Es wird angemerkt, daß die vorliegende Erfindung bei einer Presse 10 benutzt werden könnte, die eine Ballenbildungskammer 30 mit einem variablen Volumen anstatt mit einem festen Volumen besitzt, wie sie hier beschrieben ist.

Eine Erntegutförderanordnung 33 mit einem breiten Aufnehmer 34 und einem Rotationsförderer 36 ist vorgesehen, um zu Schwaden gelegtes Erntegut über den Einlaß 32 in die Ballenbildungskammer 30 zu geben. Der Rotationsförderer 36 enthält eine Mittenwelle 38, die zum Vollführen einer Drehung um eine horizontale Querachse an den Vorderteil 18 angebaut ist.

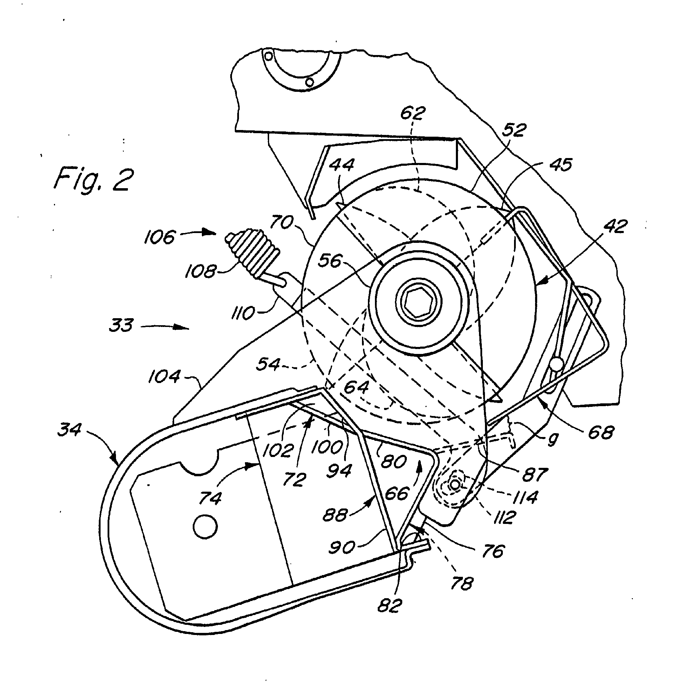

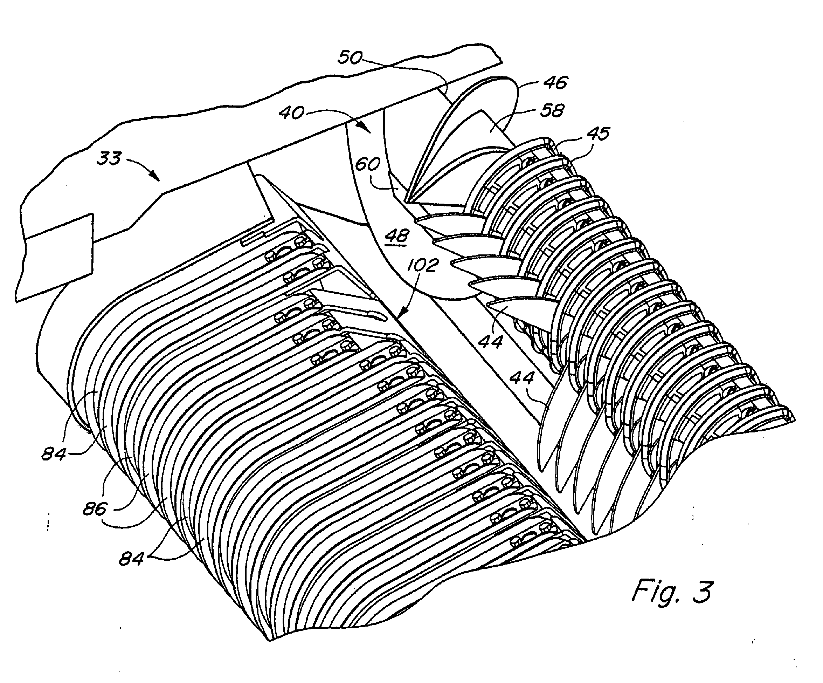

In den Figuren 2 und 3 ist zu sehen, daß der Rotationsförderer 36 rechte und linke zur Mitte fördernde Schnecken 40 und 42 enthält. Eine Vielzahl fester, plattenartiger Zinken 44 ist zwischen den Schnecken 40 und 42 an in der Querrichtung einen Abstand zueinander aufweisenden Stellen montiert, und eine Anzahl von Abstreifern 45, die in der Seitenansicht eine ovale Form haben, sind in der Querrichtung mit Abstand zueinander montiert, so daß die Zinken 44 zwischen benachbarten dieser Abstreifer 45 hindurchtreten können. Die rechte Schnecke 40 enthält ein Paar winkelmäßig versetzter Schneckenwendel 46 und 48, die an einen zylindrischen Kern 50 (Figur 3) angebracht sind, und die linke Schnecke 42 enthält ein Paar winkelmäßig versetzter Schneckenwendel 52 und 54, die an einen zylindrischen Kern 56 (Figur 3) angebracht sind. Erste und zweite Erntegutanheber 58 und 60, von denen jeder in der Form einer bogenartig gekrümmten Platte gehalten ist, die von einem breiten Ende parallel zu der Drehachse des Rotationsförderers 36 und an dem Kern 50 angebracht zu einem schmalen Ende nahe der äußeren Umfänge der Schneckenwendel 46 und 48 zulaufen, sind an einem inneren Endbereich der rechten Schnecke 40 angebracht und den Schneckenwendeln 46 und 48 zugeordnet. Die Erntegutanheber 58 und 60 sind winkelmäßig um 180 Grad zueinander versetzt und jeder erstreckt sich ungefähr 90 Grad um die Achse des Kerns 50, wobei der Bogenverlauf der Erntegutanheber 58 und 60 derart ist, daß der Abstand zu der Achse des Kerns 50 allmählich in der Richtung von dem breiten an den Kern 50 befestigten Ende weg zunimmt. Eine äußere Kante jedes der Erntegutanheber 58 und 60 ist jeweils an einer voreilenden Kante der Schneckenwendel 46 und 48 gesichert, und jeweilige innere Kanten jedes der Erntegutanheber 58 und 60 enden nahe dem inneren Ende des Kerns 50 in einer Ebene, die rechtwinklig zu der Achse des Kerns 50 verläuft. Wie man es mit Blick auf die Figuren 1 und 2 sieht, dreht der Rotationsförderer 36 im Uhrzeigerdrehsinn, so daß das breite Ende jedes der Erntegutanheber 58 und 60 das voreilende Ende ist. Es ist daher zu erkennen, daß die Erntegutanheber 58, 60 das Erntegut, das von dem Aufnehmer 34 an die Schnecke 40 abgegeben wird, berühren und das Erntegut auf den äußeren Umfang der Schnecke 40 anheben.

Die linke Schnecke 42 enthält Erntegutanheber 62 und 64, die jeweils den Schneckenwendeln 52 und 54 zugeordnet und in Bezug auf jeden der Erntegutanheber 58 und 60 von gleicher Form ausgebildet und in gleicher Weise wie diese montiert sind.

Jede der Schnecken 40, 42 ist mit einem Schneckenmuldenzusammenbau 66 mit einer Schneckenmulde 68 ausgestattet, die von verschiedenen sich quer erstreckenden Stützrahmenteilen gebildet wird, die sich parallel zu der Drehachse des Rotationsförderers 36 erstrecken, um so drei integrale Seiten zu bilden, die sich nahe eines kreisförmigen Pfades 70 befinden, dem der Außenumfang jeder der Schnecken 40 und 42 folgt. Jeder rückwärtige Abschnitt der Schneckenmulde 68 ist an das Fahrgestell 12 angebracht und erstreckt sich ungefähr von einer 2-Uhr-Stellung in eine 5-Uhr-Stellung um die Drehachse des Rotationsförderers 36, wie dies in Figur 2 zu sehen ist. Jeder Schneckenmuldenzusammenbau 66 enthält ferner einen vorderen Abschnitt der Schneckenmulde 72, der von dem rückwärtigen Abschnitt der Schneckenmulde 68 getrennt und teilweise von dem Rahmen 74 des Aufnehmers 34 gebildet ist.

Insbesondere der Rahmen 74 stellt einen Schweißzusammenbau mit sich gegenüberliegenden Seitenplatten 76 dar, die abgewinkelte rückwärtige Ende aufweisen, die von zusammenlaufenden Boden- und Deckenbereichen gebildet werden. Ein erster Winkelteil 78, der in der Ansicht auf sein Ende im wesentlichen eine Z-Form aufweist, erstreckt sich zwischen den gegenüberliegenden Seitenplatten 76 und verbindet diese. Eine Seite 80, die die Oberseite des "Z" bildet, definiert einen Zwischenteil des vorderen Abschnitts 72 der Schneckenmulde 68, während eine Seite 82, die den Boden des "Z" bildet, eine Anschlußfläche für ein unteres Ende von jedem aus einer Vielzahl U-förmiger Abstreiferbleche bildet, wobei eine Vielzahl Abstreiferbleche lange Abstreiferbleche 84 (Fig. 3) darstellt, während die Abstreiferbleche, die sich in der Längsrichtung gesehen mit den Erntegutanhebern 58, 60 auf jeder Seite des Rotationsförderers 36 decken, etwas kürzere Abstreiferbleche 86 darstellen, was aus der nachfolgenden Beschreibung klar wird. Ein rückwärtiger Bereich jedes vorderen Abschnitts 72 der Schneckenmulde 68 wird von einer sich quer erstreckenden Bodenplatte 87 gebildet, die sich rückwärtig der Oberseite des "Z" unter den Schnecken 40, 42 erstreckt und mit diesem verbunden ist, wobei er zu der unteren vorderen Kante des zugeordneten rückwärtigen Abschnitts der Schneckenmulde 68 in einer überlappenden Beziehung steht um so zu dieser einen Spalt g zu bilden. Zwischen den Seitenplatten 76 und mit diesen verbunden erstreckt sich auch ein zweiter Winkelteil 88 mit einem aufrechten unteren Bereich 90, der ungefähr die untere Hälfte des Winkelteils 88 bildet und an der Vorderseite des ersten Winkelteils 78 untergebracht ist. Ein oberer Bereich des zweiten Winkelteils 88 wird von einer Vielzahl in der Querrichtung voneinander beabstandeter Finger mit zwei unterschiedlichen Ausrichtungen gebildet. Insbesondere enthält jeder erste Finger einen unteren Abschnitt 94, der von der Oberseite des unteren Bereichs 90 und diesem gegenüber um einen ersten Winkel von ungefähr 30 Grad nach oben und vorne abgewinkelt ist, was den unteren Abschnitt 94 der Finger so anordnet, daß er als ein Teil des vorderen Abschnitts 72 der Schneckenmulde 68 dient, wobei der erste Finger einen sich nach vorne erstreckenden Endbereich 96 aufweist, der parallel zu dem Boden des Z-förmigen ersten Winkelteils 78 verläuft und als eine Anschlußfläche für den oberen rückwärtigen Endbereich eines entsprechenden der langen Abstreiferbleche 84 dient. Zweite Finger sind in entsprechenden Zonen auf den sich gegenüberliegenden Seiten des Aufnehmers 34 untergebracht, die sich in der Längsrichtung mit den Erntegutanhebern 58, 60 und 62 und 64 decken. Die zweiten Finger enthalten untere Abschnitte 100, die ebenfalls nach oben und nach vorne abgewinkelt sind, und zwar von dem unteren Bereich 90, um so als ein Teil des vorderen Abschnitts 72 der Schneckenmulde 68 zu dienen, wobei diese aber unter einem Winkel von ca. 60 Grad gegenüber dem unteren Bereich 90 verlaufen. Demzufolge sind die Abschnitte 100 der zweiten Finger weiter von dem Drehkreis der Erntegutanheber 58 und 60 oder 62 und 64 entfernt, um so entsprechende Entlastungszonen 102 zu bilden, um für einen Los-laß-Bereich von Fremdkörpern zu sorgen, so daß diese nicht zwischen den Schneckenmuldenzusammenbau 66 und den zugeordneten Erntegutanhebern 58 und 60 oder 62 und 64 eingeklemmt werden. Wenn sich einmal ein Fremdkörper in der einen oder anderen Entlastungszone 102 befindet, wird er wohl von den Erntegutanhebern 58 und 60 oder 62 und 64 nach vorne hinausgeworfen. Es wird hier angemerkt, daß der Rahmen 74 des Aufnehmers 34 auch sich gegenüberliegende Teile 104 enthält, die sich nach oben und hinten erstrecken und an den Rahmen 12 angebracht sind, um um die Achse der Mittenwelle 38 des Rotationsförderers 36 zu schwenken, wodurch sich eine Achse bildet, um die der Aufnehmer 34 während des Betriebs vertikal schwimmen kann. Demnach schwimmt jeder vordere Abschnitt 72 der Schneckenmulde 68 mit dem Aufnehmer 34 und bleibt ordnungsgemäß so angeordnet, daß er als eine Schneckenmulde dienen kann. Es wird angemerkt, daß die Bodenplatte 87 von vorne nach hinten aufwärts abgewinkelt ist, wenn sich die Erntegutförderanordnung 33 in der normalen Arbeitsstellung befindet, wie dies in Figur 2 gezeigt ist, so daß Erntegutteile zurückgehalten werden. Wenn die Erntegutförderanordnung 33 jedoch in ihre Transportstellung angehoben ist, ist die Bodenplatte 87 von vorne nach hinten abwärts geneigt, so daß Erntegutteile heraus fallen und Wasser durch den Spalt abfließt, so daß eine Ansammlung von Wasser und/oder Erntegut nicht auftritt, was in Rost und verrottetem Erntegut resultieren würde, die den Widerstand der Schwimmbewegung des Aufnehmers 34 und/oder der ordnungsgemäßen Zufuhr von Erntegut während des Betriebs erhöhen würden.

Ein Paar von Schwimmfederzusammenbauten 106 ist jeweils zwischen das Fahrgestell 12 und den Rahmen 74 eingebaut, um somit einen wesentlichen Teil des Gewichts des Aufnehmers 34 zu tragen. Jeder Schwimmfederzusammenbau 106 enthält eine als Schraubenspannfeder ausgebildete Feder 108, die zwischen einen nicht gezeigten Federendenhalter an dem Fahrgestell 12 und einen L-förmigen Lenker 110 eingefügt ist, der eine Rolle 112 trägt, die in einer nierenförmigen Ausnehmung 114 an einer unteren Stelle des nahegelegenen seitlichen Teils 104 des Aufnehmers 34 aufgenommen ist.

## Patentansprüche

1. Erntegutförderanordnung (33) mit einem oberschlächtig fördernden Aufnehmer (34) und wenigstens einer diesem stromabwärts folgenden oberschlächtigen Schnecke (40, 42) mit wenigstens einem in Drehrichtung ansteigenden Erntegutanheber (58, 60, 62, 64), unterhalb der sich eine Schneckenmulde (68) erstreckt, **dadurch gekennzeichnet, daß** die Schneckenmulde (68) im Bereich des Erntegutanhebers (58, 60, 62, 64) sich von dem Drehkreis des Erntegutanhebers (58, 60, 62, 64) entfernend verläuft.

2. Erntegutförderanordnung nach Anspruch 1, **dadurch gekennzeichnet, daß** der Aufnehmer (34) mit Abstreiferblechen (84, 86) versehen ist, zwischen denen Förderzinken vertikal umlaufen und deren oberer rückwärtiger Endbereich auf von der Schnecke (40, 42) im Bereich der Erntegutanheber (58, 60, 62, 64), weggerichteten Bereichen eines kammartig gestalteten vorderen Abschnitts (72) der Schneckenmulde (68) befestigt sind.

3. Erntegutförderanordnung nach Anspruch 1 oder 2, **dadurch gekennzeichnet, daß** die Schneckenmulde (68) in einem Bodenbereich mit einem Spalt versehen ist, der in einer Arbeitsstellung der Erntegutförderanordnung höher und in einer Transportstellung tiefer liegt als eine Bodenplatte (87).

4. Erntegutförderanordnung nach einem oder mehreren der vorherigen Ansprüche, **dadurch gekennzeichnet, daß** kurze und lange Abstreiferbleche (84, 86) vorgesehen sind.

5. Presse (10), insbesondere Rundballenpresse, mit einer Erntegutförderanordnung nach einem oder mehreren der vorherigen Ansprüche.

## Claims

1. Crop conveying arrangement (33) having an overshot-conveying receiver (34) and at least one overshot screw (40, 42) which follows the latter downstream, having at least one crop lifter (58, 60, 62, 64) which rises in the direction of rotation and underneath which a screw trough (68) extends, **characterised in that** the screw trough (68) extends in the region of the crop lifter (58, 60, 62, 64) departing from the rotational circle of the crop lifter (58, 60, 62, 64).

2. Crop conveying arrangement according to claim 1, **characterised in that** the receiver (34) is provided with cleaning plates (84, 86), between which conveying tines circulate vertically and the upper rearward end region of which is mounted on regions, which are directed away from the screw (40, 42) in the region of the crop lifters (58, 60, 62, 64), of a front portion (72) of the screw trough (68), which portion has a comb-like configuration.

3. Crop conveying arrangement according to claim 1 or 2, **characterised in that** the screw trough (68) is provided in a base region with a gap which, in an operational position of the crop conveying arrangement, is higher and, in a transport position, is lower than a base plate (87).

4. Crop conveying arrangement according to one or more of the preceding claims, **characterised in that** short and long cleaning plates (84, 86) are provided.

5. Baler (10), in particular a round baler, having a crop conveying arrangement according to one or more of the preceding claims.

## Revendications

1. Dispositif de transport de la récolte (33) comportant un ramasseur (34), transportant par le dessus, et au moins une vis de transport (40, 42), montée directement en aval de celui-ci et active par le dessus, avec au moins un releveur de récolte (58, 60, 62, 64) s'élevant dans le sens de rotation en dessous duquel s'étend un carter inférieur (68) de la vis de transport, **caractérisé en ce que**, dans la zone du releveur de récolte (58, 60, 62, 64), le carter inférieur (68) de la vis de transport s'étend en étant éloigné du cercle de rotation du releveur de récolte (58, 60, 62, 64).

2. Dispositif de transport de la récolte selon la revendication 1, **caractérisé en ce que** le ramasseur (34) est muni de racleurs (84, 86), entre lesquels les dents de ramassage tournent verticalement et dont les zones d'extrémité arrière supérieures sont fixées sur des zones, écartées de la vis de transport (40, 42) dans la zone du releveur de récolte (58, 60, 62, 64), dans une partie avant (72), en forme de peigne, du carter inférieur (68) de la vis de transport.

3. Dispositif de transport de la récolte selon la revendication 1 ou 2, **caractérisé en ce que** le carter inférieur (68) de la vis de transport est muni dans une zone du fond d'une fente qui, dans une position de travail du dispositif de transport de la récolte, est plus haute qu'une plaque de fond (87) et, dans une position de transport, est plus basse que celle-ci.

4. Dispositif de transport de la récolte selon une ou plusieurs des revendications précédentes, **caractérisé en ce que** des racleurs (84, 86) courts et longs sont prévus.

5. Presse (10), en particulier presse à balles cylindriques, comportant un dispositif de transport de la récolte selon une ou plusieurs des revendications précédentes.
